# EUROPÄISCHE PATENTANMELDUNG

(11) **EP 0 598 699 A1**
(43) Veröffentlichungstag der Anmeldung: **25.05.1994**
(21) Anmeldenummer: 93890217.8
(22) Anmeldetag: 04.11.1993
(51) Int. Cl.: F02B 27/02

(54) **Viertakt-Brennkraftmaschine**

(30) Priorität: 16.11.1992 AT 2262/92
(71) Anmelder: Laimböck, Franz, Dipl.Ing.Dr., A-8051 Graz-Thal (AT); Fürschuss, Alexander F.W., A-4481 Asten (AT)
(72) Erfinder: Laimböck, Franz, Dipl.Ing.Dr., A-8051 Graz-Thal (AT); Fürschuss, Alexander F.W., A-4481 Asten (AT)
(74) Vertreter: Hübscher, Heiner, Dipl.-Ing.

(57) **Zusammenfassung**

Eine Viertakt-Brennkraftmaschine weist mindestens zwei Einlaßventile (5) und eine sich entsprechend teilende Ansaugleitung (1) auf. Um im höheren Drehzahlbereich gute Leistungswerte und einen günstigen spezifischen Verbrauch zu erreichen und im unteren Drehzahl- bzw. Lastbereich einen geringeren Verbrauch und niedrigere Abgasemmisionen zu gewährleisten, ist in Strömungsrichtung hinter der Teilung der Ansaugleitung (1) ein mit wenigstens zwei je einer Teilansaugleitung (3, 4) zugeordnetem, zu je einem Einlaßventil (5) führenden Kanälen (3a, 4a) eingebaut. Außerdem weist die Brennkraftmaschine einen zusätzlichen Rohrabschnitt auf, der in der Stellung des Drehschiebers (7) für den unteren Drehzahl- bzw. Lastbereich von einer Teilansaugleitung (3) aus durch den Drehschieber (7) zu einem (3a) der Kanäle (3a, 4a) durchströmt ist, der sich in Offenstellung befindet, während der Drehschieber (7) den oder die übrigen Kanäle (4a) absperrt.

## Beschreibung

Die Erfindung betrifft eine Viertakt-Brennkraftmaschine mit mindestens zwei Einlaßventilen und einer sich entsprechend teilenden Ansaugleitung, wobei in Strömungsrichtung hinter der Teilung der Ansaugleitung ein Drehschieber mit mindestens zwei Kanälen eingebaut ist, die je einer Teilansaugleitung zugeordnet sind.

Bei einer bekannten Viertakt-Brennkraftmaschine dieser Art (SU-Abstract, Sektion Q, Q52Q53, SU 981-660) wird der Drehschieber dazu benützt, ein fettes Gemisch durch den kleinen Kanal einer Nebenbrennkammer geregelt zuzuführen und nicht eine Schaltung der Kanäle erreicht.

Der Erfindung liegt die Aufgabe zugrunde, eine solche Brennkraftmaschine in der Weise zu verbessern, daß bei höheren Drehzahlen gute Leistungswerte sowie ein günstiger spezifischer Verbrauch und insbesondere bei niedriger Drehzahl und Teillast ein verringerter Verbrauch sowie niedrige Abgasemmisionen erzielt werden.

Die Erfindung löst die gestellte Aufgabe dadurch, daß die Kanäle möglichst geradlinig zu je einem Einlaßventil führen und die Brennkraftmaschine einen zusätzlichen Rohrabschnitt aufweist, der in einer Stellung des Drehschiebers von einer Teilansaugleitung aus durch den Drehschieber zu einem der Kanäle durchströmt ist, der sich in Offenstellung befindet, wogegen der Drehschieber den oder die übrigen Kanäle absperrt.

In der Maximalleistungsstellung wird das Frischgas durch die Kanäle des Drehschiebers getrennt und möglichst geradlinig mit kurzer Ansauglänge ungedrosselt zu den Einlaßventilen geführt, so daß sich eine gute Frischgasansaugung mit dem bekannten Effekt der Schwingaufladung ergibt. Im unteren Drehzahl- bzw. Lastbereich ist nur mehr einer der Kanäle zu dem zugehörigen Einlaßventil hin offen, wobei zufolge der Luftführung über den zusätzlichen Rohrabschnitt eine entsprechende Rohrlänge dazugeschaltet wird.Das Frischgas kann nur mehr durch ein Ventil einströmen, wodurch sich, da dieses Ventil in bezug auf die Zylinderachse außermittig angeordnet ist, ein günstiger Drall der Zylinderfrischladung um die Zylinderachse ergibt. Außerdem erhöht sich die Geschwindigkeit der Gassäule in dem nunmehr einzigen Kanal, was die Gemischbildung durch Turbulenzerhöhung verbessert und in Verbindung mit der durch den zusätzlichen Rohrabschnitt erreichten großen Ansauglänge zu einer erhöhten Massenträgheit der Gassäule und damit zu einer besseren Füllung durch den Nachladeeffekt führt.

In weiterer Ausbildung der Erfindung ist der Drehschieber als sich zu den Einlaßventilen hin verjüngender Rotationskörper, vorzugsweise als Kegelstumpf, ausgebildet, und seine Achse schräg zur Strömungsrichtung des Gasflusses angeordnet. Dadurch können die Kanäle im Drehschieber besonders strömungsgünstig gestaltet werden und es ergeben sich in der Stellung für höhere Drehzahlen bzw. in der Leistungsstellung kurze Ansaugwege, wobei der zusätzliche Rohrabschnitt, also die zusätzliche Rohrlänge gänzlich verschlossen ist und so den Gaswechsel des mit der kurzen Ansauglänge schwingenden Systems nicht stören kann.

Um eine günstige Anordnung bzw. Ausbildung der Kanäle im Drehschieber zu erreichen, liegen die Achsen der unmittelbar zu den Einlaßventilen führenden Kanäle in durch die Rotationskörper- bzw. Kegelstumpfachse gelegten Ebenen.

Zur weiteren Verbesserung der Konstruktion sind die Eintrittsöffnungen der Kanäle und eines zum zusätzlichen Rohrabschnitt führenden Zusatzkanales in einer Normalebene zur Rotationskörper- bzw. Kegelstumpfachse angeordnet, und der Mittelpunkt der kreisrunden, ebenfalls in einer solchen Ebene liegenden Austrittsöffnung des ständig offenen Kanales ist auf der Achse des Rotationskörpers bzw. Kegels vorgesehen. Dadurch wird erreicht, daß bei jeder Verdrehung des Drehschiebers die Lage der Austrittsöffnung des ständig offenen Kanales unverändert und somit immer in Verbindung mit dem zugehörigen Ansaugventil verbleibt.

Der ständig offene Kanal, in den der zusätzliche Rohrabschnitt mündet, weist einen kleineren Durchmesser als der bzw. die übrigen Kanäle auf, was eine weitere Erhöhung der Strömungsgeschwindigkeit in diesem Kanal, also im Teillast- bzw. im unteren Drehzahlbereich, mit sich bringt.

Schließlich ist es günstig, wenn die vom Drehschieber zu den Einlaßventilen führenden Leitungsabschnitte mit gegensinniger Drallrichtung ausgebildet sind. Dadurch wird in der Drehstellung für hohe Leistung die Drallströmung zugunsten erhöhter Turbulenz im Brennraum aufgehoben, wogegen der Drall im Teillast- bzw. unteren Drehzahlbereich aufgrund der Gaszufuhr über den nur einen offenen Kanal erhalten bleibt.

Das Verdrehen des Drehschiebers erfolgt über eine Stelleinrichtung, deren Logik mechanisch oder elektrisch die Stellung des Drehschiebers in Abhängigkeit von der jeweiligen Betriebsbedingung der Brennkraftmaschine, z. B. nach der Drehzahl oder der Belastung, selbständig steuert.

In der Zeichnung ist der Erfindungsgegenstand beispielsweise dargestellt, und zwar zeigen die Fig. 1 und 2 das Schema der Gasführung zu den Einlaßventilen bei höheren Drehzahlen und im niedrigen Drehzahlbereich, die Fig. 3 - 5 einen Drehschieber in Draufsicht und in zwei durch die Kegelstumpfachse geführten Schnitten nach den Linien IV - IV und V - V der Fig. 3, die Fig. 6 und 7 den im Zylinderkopf einer Brennkraftmaschine eingebauten Drehschieber in der Drehstellung für hohe Leistung bzw. Drehzahlen sowie in der Stellung für den unteren Drehzahlbereich und die Fig. 8 und 9 Schnitte durch den Zylinderkopf entlang der Kanalmittellinien.

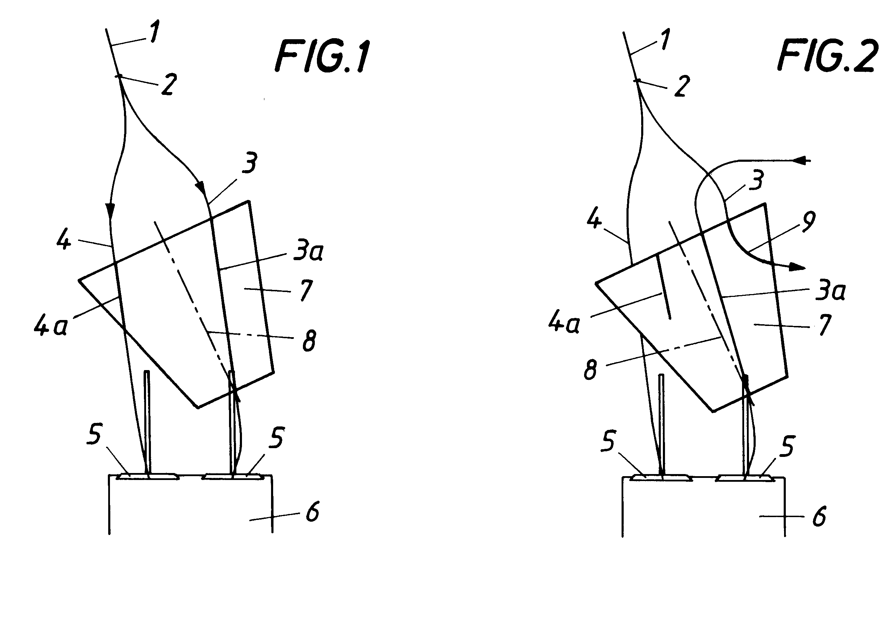

Die vom Vergaser kommende Ansaugleitung 1 teilt sich bei 2 in zwei Teilansaugleitungen 3 und 4. Mit 5 sind die beiden Einlaßventile des Zylinders 6 der Brennkraftmaschine bezeichnet. In Strömungsrichtung hinter der Teilung 2 ist in der Ansaugleitung ein als Kegelstumpf ausgebildeter Drehschieber 7 eingebaut, dessen Achse 8 schräg zur Strömungsrichtung des Gasflusses angeordnet ist und der entsprechend den beiden Teilansaugleitungen 3 und 4 möglichst geradlinige Kanäle 3a, 4a als Fortsetzung der Teilansaugleitungen 3, 4 aufweist. Bei höheren Drehzahlen bzw. größerer Leistung befindet sich der Drehschieber 7 in der in Fig. 1 dargestellten Drehstellung, in der die beiden Kanäle 3a, 4a mit kurzer Ansauglänge die beiden Einlaßventile 5 getrennt mit Frischgas versorgen. Handelt es sich dagegen um den Teillastbereich bzw. niedrige Drehzahlen, so wird der Drehschieber 7 in die Stellung nach Fig. 2 verdreht, in der er den Kanal 4a versperrt und das Frischgas aus der Teilansaugleitung 3 in einen Zusatzkanal 9 gelangt, der zu einem in der Brennkraftmaschine vorgesehenen, nicht dargestellten Rohrabschnitt führt, der im weiteren Verlauf wieder in den Kanal 3a mündet, der sich in Offenstellung befindet, d. h. es wird dem ständig offenen Kanal 3a eine zusätzliche Rohrlänge dazugeschaltet.

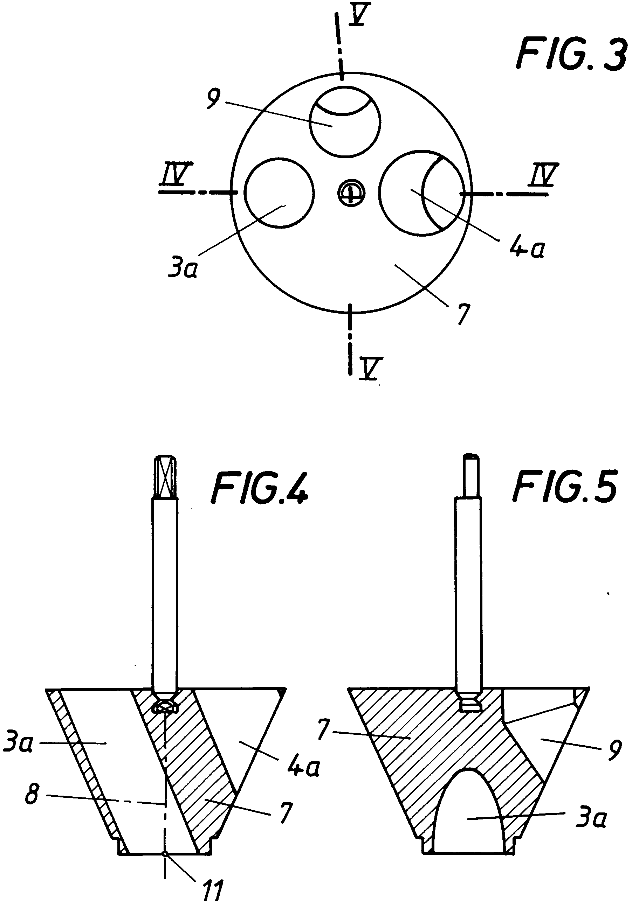

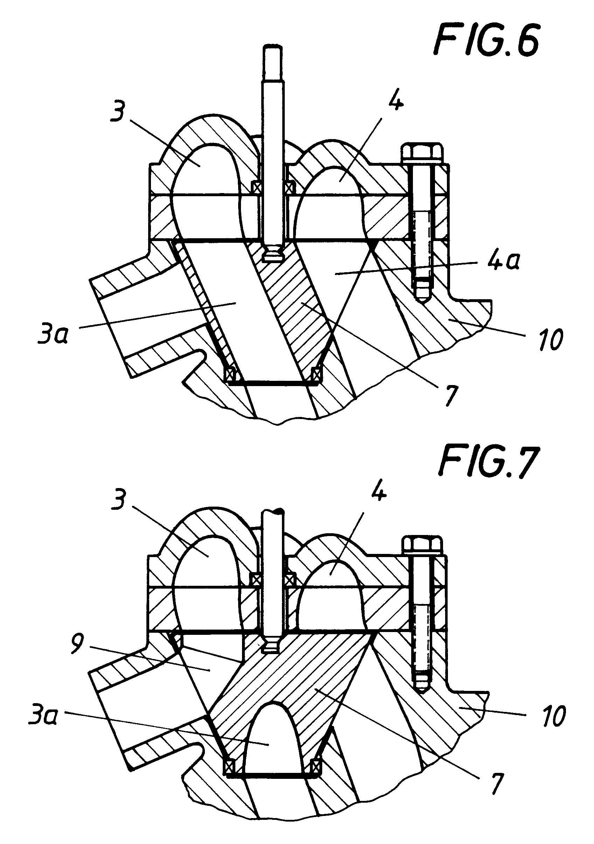

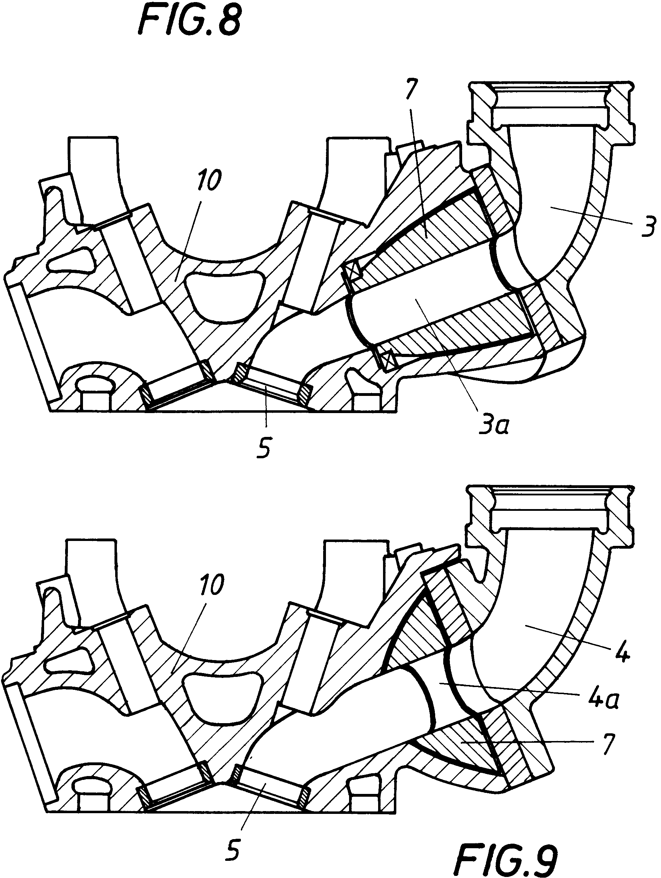

Wie aus Fig. 3 ersichtlich, sind die Eintrittsöffnungen der Kanäle 3a, 4a ebenso wie der Zusatzkanal 9 im Drehschieber 7 in einer Normalebene zur Kegelstumpfachse angeordnet. Die ebenfalls in einer zur Kegelstumpfachse normalen Ebene liegende Austrittsöffnung des Kanales 3a ist kreisförmig gestaltet, wobei ihr Mittelpunkt M auf der Achse 8 des Kegelstumpfes 7 vorgesehen ist, so daß sich ihre Lage bei einer Verdrehung des Drehschiebers nicht ändert. Die drei Einlaßöffnungen der Kanäle 3a, 4a und 9 weisen einen definierten Abstand von einander auf, und die ganze Anordnung ist so getroffen, daß in der Drehstellung nach Fig. 1 der Zusatzkanal 9 verschlossen ist, wogegen in der Stellung nach Fig. 2 sich der Kanal 4a in Sperrstellung befindet und der Zusatzkanal 9 zu dem zusätzlichen Rohrabschnitt führt, weil die Austrittsöffnungen der veiden Kanäle 4a, 9 am Kegelmantel angeordnet und daher durch den Ventilsitz verschlossen bzw. mit der Eintrittsöffnung des zusätzlichen Rohrabschnittes verbunden sind. Dies ist den Fig. 6 und 7 deutlich zu entnehmen, die die Frischgasführung bei höheren und niedrigen Drehzahlen zeigen, wobei mit 10 der Zylinderkopf bezeichnet ist. Die Schnitte nach den Fig. 8 und 9 zeigen die Einbauverhältnisse im Zylinderkopf 10 in der Drehstellung des Drehschiebers 7 bei höheren Drehzahlen bzw. Vollast.

## Patentansprüche

1. Viertakt-Brennkraftmaschine mit mindestens zwei Einlaßventilen (5) und einer sich entsprechend teilenden Ansaugleitung (1), wobei in Strömungsrichtung hinter der Teilung der Ansaugleitung (1) ein Drehschieber mit mindestens zwei Kanälen eingebaut ist, die je einer Teilansaugleitung (3, 4) zugeordnet sind, dadurch gekennzeichnet, daß die Kanäle (3a, 4a) möglichst geradlinig zu je einem Einlaßventil (5) führen und die Brennkraftmaschine einen zusätzlichen Rohrabschnitt aufweist, der in einer Stellung des Drehschiebers (7) von einer Teilansaugleitung (3) aus durch den Drehschieber (7) zu einem (3a) der Kanäle (3a, 4a) durchströmt ist, der sich in Offenstellung befindet, wogegen der Drehschieber (7) den oder die übrigen Kanäle (4a, 9) absperrt.

2. Brennkraftmaschine nach Anspruch 1, dadurch gekennzeichnet, daß der Drehschieber in an sich bekannter Weise als sich zu den Einlaßventilen (5) hin verjüngender Rotationskörper, vorzugsweise als kegelstumpf (7) ausgebildet ist und daß seine Achse (8) schräg zur Strömungsrichtung des Gasflusses verläuft.

3. Brennkraftmaschine nach den Ansprüchen 1 und 2, dadurch gekennzeichnet, daß die Achsen der unmittelbar zu den Einlaßventilen (5) führenden Kanäle (3a, 4a) in durch die Rotationskörper- bzw. Kegelstumpfachse (8) gelegten Ebenen liegen.

4. Brennkraftmaschine nach einem der Ansprüche 1 - 3, dadurch gekennzeichnet, daß die Eintrittsöffnungen der Kanäle (3a, 4a) und eines zum zusätzlichen Rohrabschnitt führenden Zusatzkanales (9) in einer Normalebene zur Rotationskörper- bzw. Kegelstumpfachse (8) angeordnet sind und der Mittelpunkt (M) der kreisrunden, ebenfalls in einer solchen Ebene liegenden Austrittsöffnung des ständig offenen Kanales (3a) auf der Achse (8) des Rotationskörpers bzw. Kegelstumpfes (7) vorgesehen ist.

5. Brennkraftmaschine nach einem der Ansprüche 1 - 4, dadurch gekennzeichnet, daß der ständig offene Kanal (3a), in den der zusätzliche Rohrabschnitt mündet, einen kleineren Durchmesser als der bzw. die übrigen Kanäle (4a) aufweist.

6. Brennkraftmaschine nach einem der Ansprüche 1 - 5, dadurch gekennzeichnet, daß die vom Drehschieber (7) zu den Einlaßventilen (5) führenden Leitungsabschnitte mit gegensinniger Drallrichtung ausgebildet sind.
